# EUROPÄISCHE PATENTSCHRIFT

(11) **EP 1 450 181 B1**
(45) Veröffentlichungstag und Bekanntmachung des Hinweises auf die Patenterteilung: **21.12.2011**
(21) Anmeldenummer: 04002623.9
(22) Anmeldetag: 06.02.2004
(51) Int. Cl.: G01S 13/75, G01S 13/82, G06K 19/07

(54) **Schaltungsanordnung zur Signaldetektion**
Circuit arrangement for signal detection
Circuit disposé pour détecter des signaux

(30) Priorität: 11.02.2003 DE 10306689
(43) Veröffentlichungstag der Anmeldung: 25.08.2004
(73) Patentinhaber: Atmel Automotive GmbH, 74072 Heilbronn (DE)
(72) Erfinder: Fischer, Martin, Dipl.-Ing., 74629 Gleichen (DE)
(74) Vertreter: Grünecker, Kinkeldey, Stockmair & Schwanhäusser

(56) Entgegenhaltungen:
- US-A- 5 801 575
- US-A- 5 889 489
- US-A- 6 052 055

## Beschreibung

Die Erfindung bezieht sich auf eine Schaltungsanordnung zur Signaldetektion nach dem Oberbegriff des Anspruchs 1.

Schaltungsanordnungen dieser Art werden z.B. für Transponder bei kontaktlosen Identifikationssystemen (RFID-Systemen) und für Remote-Sensoren verwendet, um das von einer Basisstation bzw. einem Lesegerät gesendete, kodierte Signal zu dekodieren und in ein digitales Signal umzuwandeln. Üblicherweise wird hierzu ein von einer Antenne des Transponders empfangenes Signal durch einen Gleichrichter gleichgerichtet. Am Ausgang des Gleichrichters ist ein sogenannter Signalkondensator angeschlossen, an dem die Signalspannung anliegt, die den aktuell übertragenen Code darstellt und von einer Auswerteschaltung ausgewertet wird. Damit die Signalspannung einer Änderung der Eingangsspannung des Gleichrichters möglichst schnell nachfolgt, wird der Signalkondensator durch eine Entladestromquelle bzw. Entladestromsenke mit einem definierten Entladestrom beaufschlagt. Der Entladestrom wird der Kapazität des Signalkondensators angepasst dimensioniert, wobei die Kapazität derart gewählt wird, dass kleine Zeitkonstanten erzielt werden und gleichzeitig eine UHF-Entkopplung gewährleistet ist.

Eine derartige Entladestromsenke, die eine Stromspiegelschaltung aufweist, ist beispielsweise aus der US 5 889 489 bekannt. Die Stromspiegelschaltung ist als sogenannter einfacher Stromspiegel bestehend aus zwei n-FET-Transistoren ausgeführt, bei der ein Stromsollwert in Form eines Referenzstroms durch einen der Transistoren die Stromstärke des anderen Transistors, d.h. den Entladestrom, bestimmt. Bei derartigen Stromspiegeln nimmt aufgrund der Eigenschaften der MOS-Transistoren die Stromstärke bei Signalspannungen, die kleiner als die Transistor-Sättigungsspannung sind, stark ab. Weiterhin besteht auch bei Signalspannungen oberhalb der Transistor-Sättigungsspannung eine Abhängigkeit zwischen Entladestrom und Signalspannung.

Aus der US 5 801 575 ist eine Stromspiegelschaltung zur Stabilisierung einer Spannung für einen passive Empfängerschaltung bekannt. Des Weiteren ist aus der US 5 359 296 eine Stromspiegelschaltung mit Transistoren in Kaskodenschaltung bekannt.

Stromquellen in Form von Stromspiegelschaltungen, die eine geringere Abhängigkeit zwischen Strom und Spannung aufweisen, werden beispielsweise in Operationsverstärkern eingesetzt. In Johns D. A., Martin K., Analog Integrated circuit design, Seite 256-259, ISBN: 0-471-144487 ist eine sogenannte Kaskode-Stromspiegelschaltung mit großem Ausgangsbereich oder "wide-swing cascode current mirror" für Operationsverstärker beschrieben, welche die Abhängigkeit zwischen Strom und Spannung erheblich reduziert.

Der Erfindung liegt als technisches Problem die Bereitstellung einer Schaltungsanordnung zur Signaldetektion der eingangs genannten Art zugrunde, die eine zuverlässige Signaldutektion, insbesondere unabhängig von der am Transponder herrschenden Feldstärke sicherstellt.

Die Erfindung löst dieses Problem durch die Bereitstellung einer Schaltungsanordnung mit den Merkmalen des Anspruchs 1,

Bei der erfindungsgemäβen Schaltungsanordnung umfasst die Stromspiegelschaltung der Entladestromsenke in Kaskode geschaltete Transistoren. Durch eine derartige Auslegung erhöht sich der Innenwiderstand der Stromsenke stark, wodurch sich insbesondere bei Signalspannungen oberhalb der Transistor-Sättigungsspannung eine wesentlich idealere, d.h. flachere Strom-Spannungs-Kennlinie ergibt. Dies bewirkt eine weitgehende Unabhängigkeit des Entladestroms von der Signalspannung. Weiterhin weist eine derartige Auslegung im Vergleich zu einfachen Stromspiegeln weniger parasitäre Kapazitäten auf, die parallel zum Signalkondensator liegen.

In einer Weiterbildung der Schaltungsanordnung nach Anspruch 2 bilden die in Kaskode geschalteten Transistoren eine Kaskode-Stromspiegelschaltung mit großem Ausgangsbereich. Der mögliche Signalbereich bzw. Signalhub wird somit vergrößert, wodurch ein Betrieb der Detektionsschaltung über einen großen Feldstärkebereich hinweg sichergestellt werden kann. Weiterhin ist es möglich, ein günstiges, d.h. stromsparendes Spiegelverhältnis bei gleichzeitig minimalem Spiegelfehler zu wählen, ohne den Signalkondensator, wie bei einem einfachen Stromspiegel, durch parasitäre Kapazitäten zu belasten.

In einer Weiterbildung der Schaltungsanordnung nach Anspruch 3 ist der Signalkondensator mit einer Spannungsbegrenzerschaltung gekoppelt. Dies verhindert eine mögliche Fehlfunktion bzw. Beschädigung der nachfolgenden Schaltungsteile und stellt sicher, dass bei hohen Feldstärken im Nahfeld der Basisstation sogenannte "Notches", die als Separatoren zwischen zwei aufeinanderfolgenden Datenbits dienen, zuverlässig erkannt werden.

In einer Weiterbildung der Schaltungsanordnung nach Anspruch 4 beinhaltet die Spannungsbegrenzerschaltung in Serie geschalteten Dioden oder einer Zenerdiode, die dem Signalkondensator parallel geschaltet sind. Derartige Bauteile sind einfach und platzsparend in eine Schaltung integrierbar und benötigen keine separate Ansteuerlogik zur Erkennung einer Überspannung.

Eine vorteilhafte Ausführungsform der Erfindung ist in den Zeichnungen dargestellt und wird nachfolgend beschrieben. Hierbei zeigen:
- Fig. 1: ein schematisches Blockschaltbild einer Schaltungsanordnung zur Signaldetektion,
- Fig. 2: ein Schaltbild einer in Fig. 1 als Entladestromsenke dienenden Kaskode-Stromspiegelschaltung mit großem Ausgangsbereich,
- Fig. 3: ein Diagramm von Strom-Spannungs-Kennlinien der Kaskode-Stromspiegelschaltung von Fig. 2 und eines einfachen Stromspiegels,
- Fig. 4: ein Diagramm eines exemplarischen zeitlichen Verlaufs eines Eingangssignals im Nahfeld einer Basisstation und
- Fig. 5: ein Diagramm des zeitlichen Verlaufs von Signalspannungen bei Empfang des Eingangssignals von Fig. 4 ohne und mit einer Spannungsbegrenzerschaltung.

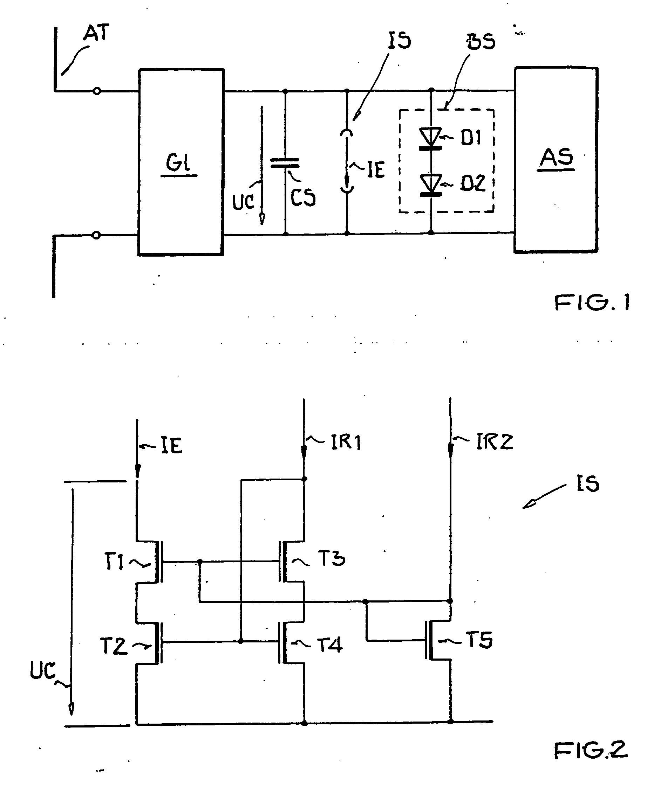

Fig. 1 zeigt ein schematisches Blockschaltbild einer Schaltungsanordnung zur Signaldetektion mit einer Antenne AT, einem Gleichrichter GL, der an seinem Eingang an die Antenne AT angeschlossen ist, einem Signalkondensator CS, der zwischen die Ausgangspole des Gleichrichters GL eingeschleift ist, einer Entladestromsenke IS, die dem Signalkondensator CS parallel geschaltet ist, einer dem Signalkondensator CS und der Entladestromsenke IS parallel geschalteten Begrenzerschaltung BS in Form von zwei in Serie geschalteten Dioden D1 und D2 und einer Auswerteschaltung AS, welche die Signalspannung UC am Signalkondensator CS zur Erzeugung eines digitalen Signals auswertet.

Die Funktion der in Fig. 1 gezeigten Schaltungsanordnung wird nachfolgend für den Fall beschrieben, dass als Modulationsverfahren eine ASK-Modulation des Trägersignals verwendet wird, bei der eine logische "1" durch Anwesenheit des Trägersignals und eine logische "0" durch vollständige Unterdrückung des Trägersignals dargestellt werden. Die Funktion der gezeigten Schaltung ist jedoch nicht darauf beschränkt. Die Modulation wird durch eine nicht gezeigte Basisstation durchgeführt.

Bei Anwesenheit des Trägersignals stellt sich am Ausgang des Gleichrichters GL, d.h. am Signalkondensator CS, eine der Feldstärke des Trägersignals entsprechende Signalspannung UC ein, die durch die Auswerteschaltung AS bewertet wird. Überschreitet die Signalspannung UC einen Schwellwert der Auswerteschaltung AS, wird eine logische "1" erkannt. Wenn das Trägersignal durch die Basisstation abgeschaltet wird, wird der Signalkondensator CS mit Hilfe der Entladestromsenke IS vollständig entladen. Die Auswerteschaltung erkennt eine logische "0".

Der innere Aufbau der Entladestromsenke IS ist in Fig. 2 dargestellt. Die Entladestromsenke IS umfasst Transistoren T1 bis T5, die derart miteinander verschaltet sind, dass sie eine Kaskode-Stromspiegelschaltung mit großem Ausgangsbereich bilden. Der Entladestrom IE der Entladestromsenke IS wird durch Referenzströme IR1 und IR2 und die Transistorparameter bestimmt, wobei hier IR1 gleich IR2 und ein Spiegelverhältnis von 1:10 gewählt sind. Der sogenannte Kaskodentransistor T1 hat einen nur geringen Einfluss auf das Spiegelverhältnis, so dass seine Kanalbreite bzw. Kanallänge klein gewählt werden können, um die durch ihn verursachten parasitären Kapazitäten parallel zum Signalkondensator zu minimieren. Dadurch ist es insgesamt möglich, die durch die Entladestromsenke verursachten parasitären Kapazitäten gering zu halten und gleichzeitig ein im Hinblick auf den Stromverbrauch günstiges Spiegelverhältnis bei geringem Spiegelfehler zu erzielen.

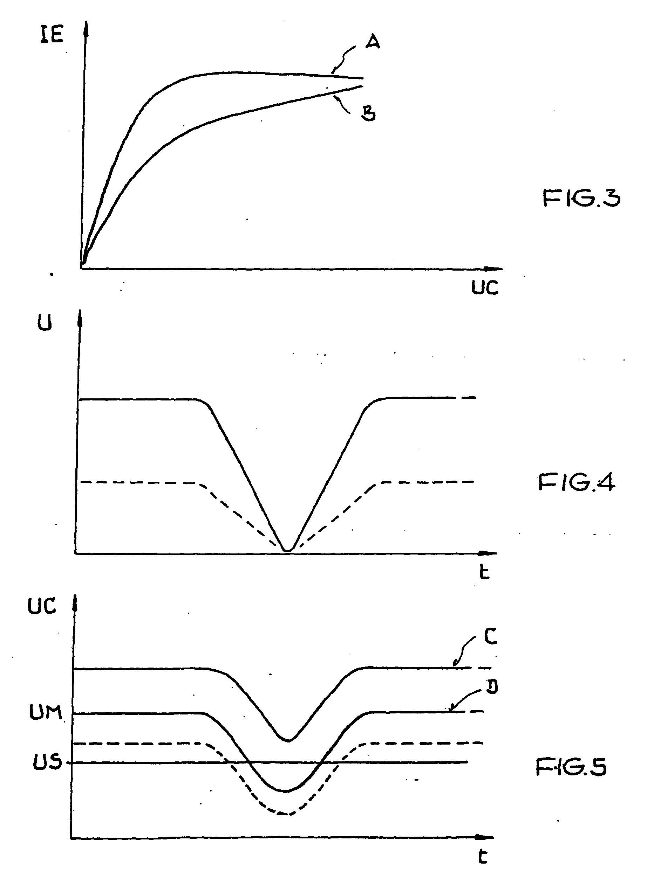

Fig. 3 zeigt vergleichend ein Diagramm der Strom-Spannungs-Kennlinien der Kaskode-Stromspiegelschaltung von Fig. 2 und eines einfachen Stromspiegels bei einem identischen Spiegelverhältnis von jeweils 1:10. Die Spannungsabhängigkeit der Stromstärke ist bei der mit A bezeichneten Kennlinie der Kaskode-Stromspiegelschaltung deutlich geringer ausgeprägt als bei der mit B bezeichneten Kennlinie der einfachen Stromspiegelschaltung. Eine beispielsweise durch Entfernungsänderung zwischen Basisstation und Transponder verursachte Änderung der Trägerfeldstärke führt zu einer Änderung der Signalspannung UC. Diese Änderung bewirkt bei der einfachen Stromspiegelschaltung eine größere Änderung der im Transponder ermittelten Impulsdauern, da sich der die Entladezeit bestimmende Entladestrom IE stärker verändert. Derartige Effekte sind bei der Kaskode-Stromspiegelschaltung reduziert, wodurch eine zuverlässigere Rückgewinnung des digitalen Signals gewährleistet ist.

Eine weitere Verbesserung der Betriebssicherheit wird durch die Begrenzerschaltung BS erreicht. Fig. 4 zeigt ein Diagramm eines exemplarischen zeitlichen Verlaufs eines Eingangssignals am Gleichrichter GL von Fig. 1 im Nahfeld, durchgezogen dargestellt, und im Fernfeld der Basisstation gestrichelt dargestellt. Die Basisstation unterdrückt das Trägersignal für eine kurze Zeit, um einen Separator oder "Notch" zwischen zwei aufeinanderfolgenden Datenbits einzufügen. Aufgrund der Unterdrückung des Trägersignals fällt die Eingangsspannung bis auf 0V ab und steigt anschließend wieder auf den der Trägerfeldstärke entsprechenden Wert an. Dieser Separator muss im Transponder von der Auswerteschaltung sicher erkannt werden.

Fig. 5 zeigt ein Diagramm des zeitlichen Verlaufs der Signalspannung UC, der sich ergibt, wenn das Eingangssignal mit dem Zeitverlauf von Fig. 4 empfangen wird, wobei der Spannungsverlauf ohne Spannungsbegrenzerschaltung BS mit C und der Spannungsverlauf mit Spannungsbegrenzerschaltung BS mit D bezeichnet sind. Der Spannungsverlauf im Fernfeld ist gestrichelt dargestellt. Wenn die Signalspannung UC eine Schwellenspannung US der Auswerteschaltung unterschreitet, erkennt diese eine logische "0", andernfalls eine logische "1 ".

Wie aus dem Spannungsverlauf C ersichtlich ist, unterschreitet die Signalspannung UC im Nahfeld bei fehlender Begrenzerschaltung BS die Schwellenspannung US nicht, da aufgrund des relativ großen Wertes der Signalspannung UC bei vorhandenem Trägersignal die Spannungsabnahme während der Abwesenheit des Trägersignals nicht ausreichend ist. Der von der Basisstation eingefügte Separator wird daher durch die Auswerteschaltung AS nicht erkannt. Bei Verwendung der Begrenzerschaltung BS wird die Signalspannung UC durch diese auf einen Maximalwert UM begrenzt, da die Dioden D1 und D2 leitend werden, wenn die Signalspannung UC die Summe ihrer Durchlassspannungen überschreitet. Wenn das Trägersignal durch die Basisstation ausgeblendet wird, unterschreitet die Signalspannung UC die Schwellenspannung US, da die Spannungsabnahme während der Abwesenheit des Trägersignals hier ausreichend ist, wodurch der Separator sicher erkannt wird. Im Fernfeld wirkt sich die Begrenzerschaltung BS nicht aus, da deren Schwellenspannung UM bei Anwesenheit des Trägersignals nicht überschritten wird.

Die gezeigte Schaltungsanordnung ermöglicht eine zuverlässige und störsichere Signaldetektion im Nah- und im Fernfeld der Basisstation, wobei aufgrund der Begrenzerschaltung BS eine Beschädigung durch zu hohe Feldstärken ausgeschlossen ist.

## Patentansprüche

1. Schaltungsanordnung zur Signaldetektion bei passiven oder semipassiven Transpondern, mit
einem Gleichrichter (GL) zur Gleichrichtung eines kodierten Empfangssignals,
einer mit einem Signalkondensator (CS) gekoppelten Entladestromsenke (IS) mit einer Stromspiegelschaltung
**dadurch gekennzeichnet, dass**
der Signalkondensator (CS) an einem Ausgang des Gleichrichters (GL) angeschlossenen ist, und
ein Zweig der Stromspiegelschaltung (T1, T2, T3, T4, T5) parallel zur Entladestromsenke verschaltet ist und die Stromspiegelschaltung der Entladestromsenke (IS) in Kaskode geschaltete Transistoren (T1, T2, T3, T4, T5) umfasst.

2. Schaltungsanordnung nach Anspruch 1, **dadurch gekennzeichnet, dass**, die Kaskode Transistoren (T1, T2, T3, T4, T5) parallel zu dem Signalkondensator verschaltet sind.

3. Schaltungsanordnung nach Anspruch 1 oder Anspruch 2, **dadurch gekennzeichnet, dass** der Signalkondensator (CS) mit einer Spannungsbegrenzerschaltung gekoppelt ist.

4. Schaltungsanordnung nach einem der vorhergegangenen Ansprüche, **dadurch gekennzeichnet, dass** die Spannungsbegrenzerschaltung (BS) in Serie geschaltete Dioden (D1, D2) oder eine Zehnerdiode beinhaltet, die dem Signalkondensator (CS) parallel geschaltet sind.

## Claims

1. Circuit arrangement for detecting signals with passive or semi-passive transponders, with
a rectifier (GL) for rectifying an encoded received signal,
a discharge current sink (IS) with a current mirror circuit coupled with a signal capacitor (CS),
**characterised in that**
the signal capacitor (CS) is connected to an output of the rectifier (GL), and
a branch of the current mirror circuit (T1, T2, T3, T4, T5) is connected to the discharge current sink in parallel and the current mirror circuit of the discharge current sink (IS) comprises transistors (T1, T2, T3, T4, T5) connected in a cascode arrangement.

2. Circuit arrangement as claimed in claim 1, **characterised in that** the cascode transistors (T1, T2, T3, T4, T5) are connected to the signal capacitor in parallel.

3. Circuit arrangement as claimed claim 1 or claim 2, **characterised in that** the signal capacitor (CS) is coupled with a voltage limiter circuit.

4. Circuit arrangement as claimed in one of the preceding claims, **characterised in that** the voltage limiter circuit (BS) contains diodes (D1, D2) connected in series or a Zener diode, which are connected to the signal capacitor (CS) in parallel.

## Revendications

1. Circuit pour détecter des signaux, pour des transpondeurs passifs ou semi-passifs, avec
un redresseur (GL) pour le redressement d'un signal de réception codé,
un drain de courant de décharge (IS) couplé à un condensateur de signaux (CS) avec un circuit miroir de courant,
**caractérisé en ce que** le condensateur de signaux (CS) est raccordé à une sortie du redresseur (GL), et
un branchement du circuit miroir de courant (T1, T2, T3, T4, T5) est monté parallèlement au drain de courant de décharge, et le circuit miroir de courant du drain de courant de décharge (IS) comprend des transistors à montage cascode (T1, T2, T3, T4, T5).

2. Circuit selon la revendication 1, **caractérisé en ce que** les transistors à montage cascode (T1, T2, T3, T4, T5) sont montés parallèlement au condensateur de signaux.

3. Circuit selon la revendication 1 ou la revendication 2, **caractérisé en ce que** le condensateur de signaux (CS) est couplé à un circuit limiteur de voltage.

4. Circuit selon l'une des revendications précédentes, **caractérisé en ce que** le circuit limiteur de voltage (BS) contient des diodes (D1, D2) montées en série ou une diode Zener qui sont montées parallèlement au condensateur de signaux (CS).
